# EUROPEAN PATENT SPECIFICATION

(11) **EP 2 387 887 B1**
(45) Date of publication and mention of the grant of the patent: **10.07.2013**
(21) Application number: 11166610.3
(22) Date of filing: 18.05.2011
(51) Int. Cl.: A21C 9/06, A21C 15/00

(54) **Stuffing syringe device for food products**
Spritzvorrichtung zur Füllung von Lebensmittelprodukte
Appareil de fourrage par seringage pour produits alimentaires

(30) Priority: 20.05.2010 IT VI20100146
(43) Date of publication of application: 23.11.2011
(73) Proprietor: Canol s.r.l., 36014 Santorso (VI) (IT)
(72) Inventor: Dalla Vecchia, Renata, 36014, Santorso (Vicenza) (IT)
(74) Representative: Bettello, Pietro

(56) References cited:
- DE-A1- 3 625 307
- DE-C- 476 013
- US-A- 3 428 000
- US-A1- 2004 079 240

## Description

The present finding concerns a stuffing syringe device for food products, according to the preamble of claim 1.

In the field of food products, in particular in cake shops and bakeries, there is a stuffing operation i.e. the injection inside or the depositing on the surface of raw or cooked food products, such as brioche, croissants, cannoli, puffs, krapfen and the like, with liquid, semi-liquid or doughy products, such as cream, jam, icing, chocolate and the like.

Such an operation is carried out with machines known by the term, horizontal or vertical syringe devices, which consist of a belt for conveying the products to be stuffed, and of a stuffing group, substantially consisting of a product-containing hopper for liquid, semi-liquid or doughy stuffing products to be injected, by a dosing head, in which the stuffing product is pressurised and by a dosing head which carries out the operation of inserting a plurality of perforated elements, which can consist of needles, in the case in which an injection operation is carried out or of distributor nozzles, in the case in which an external depositing operation is carried out.

At the current state of the art, such machines operate by moving, linearly and alternately, the entire stuffing group (hopper, or head and head) so as to bring the needles or the nozzles to the products, and then retract them when the injection operation has finished.

The most important documents of the state of the art are : DE 476 013 C which discloses a stuffing syringe device according to the preamble of claim 1, US 3 428 000 A, DE 36 25 307 A1, US 2004/079 240 A1.

Such an operation method involves the movement of a very heavy mass (hopper, head and head) and therefore, during the movement, considerable inertial force is created, making it difficult for the entire group to brake; all of this imposes that, in order to avoid excessive wearing and mechanical damage to the members of the machine, a low alternate rectilinear motion speed of the entire stuffing group must be used, which of course, affects the productivity of the machine negatively.

Alternatively, syringe devices have been made in which the stuffing group remains still and in which only the dosing end equipped with the perforated elements (needles or nozzles) moves through the use of flexible tubes.

With such an embodiment, although on the one hand the moving mass is minimised and therefore the inertial force is limited, on the other hand however, there are other operation drawbacks caused by the flexible ducts that connect the mobile part (needles, nozzles) to the fixed part (made up of the dosing head).

In practical use, by using the flexible tube, there are two operation anomalies: the poor precision of the dose of product injected and the "spring" effect, which occurs when pressurising the tubes during the dosing, said situation causing the elastic deformation and the consequent dripping of the needle or nozzle. Moreover, after prolonged use, the flexible tube also deteriorates to the point of breaking through fatigue, making it necessary for the machine to stop for repairs.

The purpose of the present finding is to make a stuffing group that does not have the drawbacks of similar known products.

Specifically, one purpose of the finding is to make a stuffing group that ensures a constant and precise dosing, a high hourly production and that requires minimum maintenance.

Such a purpose is obtained by making a stuffing group, which is characterised in that the only element that is set in alternate rectilinear motion is the perforated element (needle or nozzle), which is however always inserted in the body of the dosing head, from which it directly receives the product to be injected or deposited on the product to be stuffed.

The finding shall become clearer from the description of a possible embodiment given only as an example and not for limiting purposes, with the help of the attached drawing tables, in which:

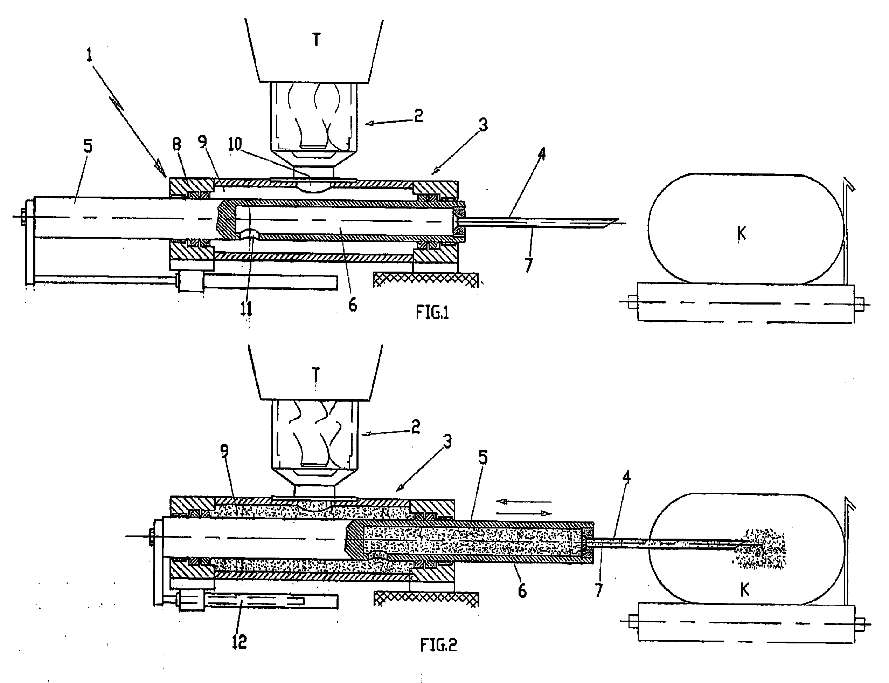

- figs. 1 and 2 represent a schematic view of the stuffing group, according to the finding, in the two conditions, resting and operation, respectively;

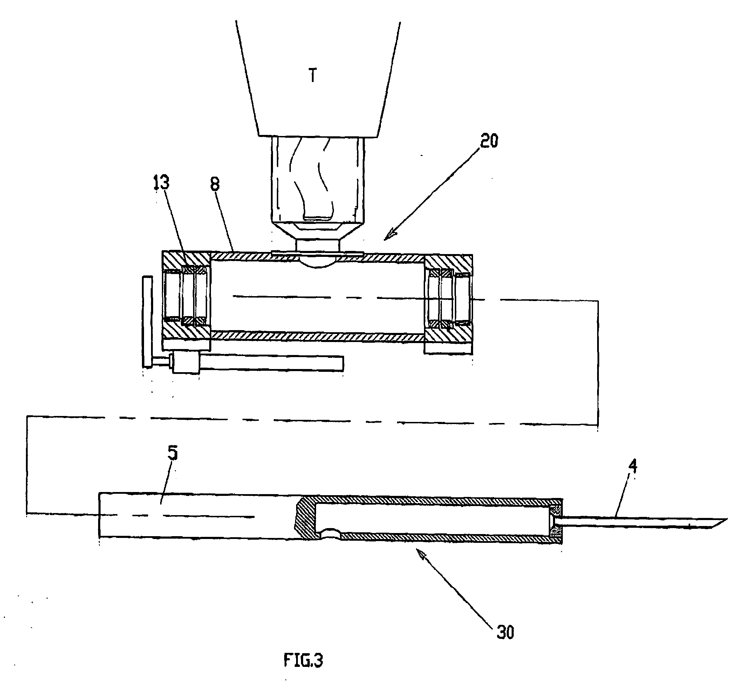

- fig. 3 represents an exploded view of the finding according to fig.1. As visible in the figures, the stuffing group, wholly indicated with reference numeral 1, is made up of a product-containing hopper "T", of a dosing head, indicated with reference numeral 2 and of a dosing head, indicated with reference numeral 3, from which project one or more perforated elements 4, needles or nozzles, which, in active phase, are positioned in the corresponding products "K", so as to carry out the stuffing, all with *per se* known methods. As visible in fig.1, the new characteristic of the finding consists of the fact that in the dosing head 3, each one of the needles 4 is applied coaxially on a rod 5, equipped with a channel 6, which is placed in communication with the hole 7 of the needle 4, said rod, moreover, being able to slide inside a cylinder 8, so as to define a chamber 9, placed in communication, through the orifice 10, with the delivery mouth of the dosing head 2 and, through at least one orifice 11, formed on the rod, with the aforementioned channel 6.

As can be gathered by observing fig. 2, the stuffing operation occurs in two phases:
- firstly, through a suitable actuator 12, the rod 5 is made to slide forwards, until the needle 4 is inserted into the product "K";
- secondly, the head 2 sucks the product to be injected (filling) from the hopper "T" and sends it, under pressure, to occupy, in succession, the chamber 9, the channel 6 and the hole 7, to then come out of the needle 4.

As can be gathered from fig. 3, the finding described above fully satisfies the purposes by being only made up of two elements, i.e. the fixed element, wholly indicated with reference numeral 20, consisting of a cylinder 8, equipped with sealing gaskets 13 and the mobile element 30, with smaller mass, made up of the needle 4 and the rod 5, the stuffing product passes directly from the containment hopper "T" to the product to be stuffed "K".

## Claims

1. Stuffing syringe device, comprising a product-containing hopper (T), a first dosing head (2) and a second dosing head (3), one or more perforating elements (4), such as needles, which project from the second dosing head (3), the perforated elements (4) being, during the active phase of an injection operation, positioned inside the corresponding products to be stuffed (K), said stuffing syringe (1) comprising a rod (5) connected to said perforating element (4), said rod (5) at all times being, at least partly, inserted inside the body of the second dosing head (3) from which it directly receives the stuffing product, said stuffing syringe (1) being **characterised in that** the only element that is set in alternate rectilinear motion is the unit formed by said perforating element (4) and said rod (5).

2. Stuffing syringe, according to claim 1, **characterised in that** in the second dosing head (3) the needle (4) is connected to the rod (5), said rod being equipped with an inner channel (6), which is placed in communication with the inner space (7) of the aforementioned needle (4), said rod being able to slide inside a cylinder (8) so as to define a chamber (9), placed in communication, through an orifice (10), with the delivery mouth of the first dosing head (2) and, through at least one further orifice (11) formed on the rod, with the aforementioned channel (6).

3. Stuffing syringe, according to claim 2, **characterised in that** it comprises a fixed element (20), consisting of the cylinder (8), equipped with sealing gaskets (13), and a mobile element (30), of low mass, made up of the needle (4) and the rod (5), the stuffing product passing from the containing hopper (T) via the stuffing syringe to the product to be stuffed (K).

## Patentansprüche

1. Füllspritzenvorrichtung, die einen Produktaufnahmetrichter (T), einen ersten Dosierkopf (2) und einen zweiten Dosierkopf (3) und eines oder mehrere Einstechelemente (4), wie beispielsweise Nadeln, die von dem zweiten Dosierkopf (3) vorstehen, umfasst, wobei die Einstechelemente (4) während der aktiven Phase eines Einspritzvorgangs innerhalb der entsprechenden zu füllenden Produkte (K) positioniert sind, wobei die Füllspritze (1) eine Stange (5) umfasst, die mit dem Einstechelement (4) verbunden ist, wobei diese Stange (5) ständig zumindest teilweise in den Körper des zweiten Dosierkopfs (3) eingefagt ist, von dem sie direkt das Füllprodukt empfängt, wobei die Füllspritze (1) **dadurch gekennzeichnet ist, dass** das einzige Element, das in eine geradlinige Hin- und Herbewegung versetzt wird, die Einheit ist, die aus dem Einstechelement (4) und der Stange (5) gebildet wird.

2. Füllspritze nach Anspruch 1, **dadurch gekennzeichnet, dass** im zweiten Dosierkopf (3) die Nadel (4) mit der Stange (5) verbunden ist, wobei die Stange mit einem inneren Kanal (6) versehen ist, der mit dem Innenraum (7) der vorgenannten Nadel (4) in Verbindung steht, wobei die Stange innerhalb eines Zylinders (8) gleiten kann, um eine Kammer (9) zu definieren, die durch eine Öffnung (10) mit der Ausgabemündung des ersten Dosierkopfs (2) und durch mindestens eine in der Stange ausgebildete weitere Öffnung (11) mit dem vorgenannten Kanal (6) in Verbindung steht.

3. Füllspritze nach Anspruch 2, **dadurch gekennzeichnet, dass** sie ein feststehendes Element (20), das aus dem mit Dichtungen (13) versehenen Zylinder (8) besteht, und ein bewegliches Element (30) geringer Masse umfasst, das aus der Nadel (4) und der Stange (5) besteht, wobei das Füllprodukt aus dem Aufnahmetrichter (T) über die Füllspritze in das zu füllende Produkt (K) übergeht.

## Revendications

1. Dispositif de seringue de fourrage, comprenant une trémie de logement de produit (T), une première tête de dosage (2) et une deuxième tête de dosage (3), un ou plusieurs éléments perforants (4), tels que des aiguilles, qui font saillie de la deuxième tête de dosage (3), les éléments perforés (4), durant la phase active d'une opération d'injection, étant positionnés à l'intérieur des produits à fourrer correspondants (K), ladite seringue de fourrage (1) comprenant une tige (5) connectée audit élément perforant (4), ladite tige (5) étant tout le temps insérée, au moins partiellement, à l'intérieur du corps de la deuxième tête de dosage (3) de laquelle elle reçoit directement le produit de fourrage, ladite seringue de fourrage (1) étant **caractérisée en ce que** le seul élément qui est mis en mouvement rectiligne alternatif est l'unité formée par ledit élément perforant (4) et ladite tige (5).

2. Seringue de fourrage selon la revendication 1, **caractérisée en ce que**, dans la deuxième tête de dosage (3), l'aiguille (4) est connectée à la tige (5), ladite tige étant munie d'un canal intérieur (6), qui est mise en communication avec l'espace intérieur (7) de l'aiguille précitée (4), ladite tige étant adaptée pour coulisser à l'intérieur d'un cylindre (8) de manière à définir une chambre (9), mise en communication, à travers un orifice (10), avec l'embouchure de distribution de la première tête de dosage (2) et, à travers au moins un autre orifice (11) formé sur la tige, avec le canal (6) précité.

3. Seringue de fourrage selon la revendication 2, **caractérisée en ce qu'**elle comprend un élément fixe (20), constitué d'un cylindre (8), muni de garnitures d'étanchéité (13), et un élément mobile (30), de faible masse, composé de l'aiguille (4) et de la tige (5), le produit de fourrage passant de la trémie de logement (T) via la seringue de fourrage au produit à fourrer (K).
